(19) Europäisches Patentamt
European Patent Office
Office européen des brevets

(11) EP 4 386 055 A1

(12) # EUROPEAN PATENT APPLICATION

(43) Date of publication:
**19.06.2024 Bulletin 2024/25**

(21) Application number: **23217323.7**

(22) Date of filing: **15.12.2023**

(51) International Patent Classification (IPC):
***C09B 67/42*** *(2006.01)*

(52) Cooperative Patent Classification (CPC):
**C09B 67/0092**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.12.2022 IT 202200025884**

(71) Applicants:
- **Università degli Studi di Bari "Aldo Moro"**
  **70121 Bari (BA) (IT)**
- **Dieffetti Cosmetici S.r.l.**
  **76013 Minervino Murge (BT) (IT)**

(72) Inventors:
- **VITALE, Paola**
  **70100 Bari (IT)**
- **DELVECCHIO, Biagio**
  **70100 Bari (IT)**
- **PERNA, Filippo Maria**
  **70100 Bari (IT)**
- **CICCO, Luciana**
  **70100 Bari (IT)**
- **DILAURO, Giuseppe**
  **70100 Bari (IT)**
- **CAPRIATI, Vito**
  **70100 Bari (IT)**

(74) Representative: **Trupiano, Federica**
**Marietti, Gislon e Trupiano S.r.l.**
**Via Larga, 16**
**20122 Milano (IT)**

(54) **SUSTAINABLE PROCESS FOR THE SYNTHESIS OF BISINDOLE ALKALOIDS IN NON-CONVENTIONAL BIODEGRADABLE SOLVENTS (DEEP EUTECTIC SOLVENTS)**

(57) The present invention relates to a sustainable synthesis process for obtaining bisindole alkaloids, which uses non-conventional biodegradable solvents, such as the low melting point eutectic mixtures (Deep Eutectic Solvents, DESs) with considerable advantages both from the point of view of environmental impact and cost-effectiveness of the process.



Processed by Luminess, 75001 PARIS (FR)

## Description

### Summary of the invention

The present invention relates to a sustainable synthesis process for obtaining bisindole alkaloids, which uses non-conventional biodegradable solvents, such as the low melting point eutectic mixtures (Deep Eutectic Solvents, DESs) with considerable advantages both from the point of view of environmental impact and cost-effectiveness of the process.

### Technical background

The massive and extensive use of volatile organic compounds (VOCs), such as the hydrocarbon solvents and other petroleum derivatives, in the pharmaceutical and fine chemical industries, has led until now to pollution of thousands of tons of water per year by organic solvents and has also contributed significantly to air pollution. In fact, solvents are often an integral part of the production process of organic compounds, both because of their ability to solubilize the reagents and because of their influence on the kinetics and thermodynamics of the chemical reactions involved in the production process. Furthermore, the solvents are also extensively used for the purification of products within extractive, separation, chromatographic and/or crystallization processes.

Today's focus on restricting climate change and environmental impact of the industrial processes has led to the awareness of the need to scale back the VOCs consumption and, at the same time, to move rapidly toward sustainable development linked to careful environmental protection. In particular, since the solvents account for about 80-90% of the mass used in a production process, the study, development and subsequent use of so-called *green* solvents as reaction media has become increasingly popular in both industry and academia field. Said "green" solvents share the common characteristic of being low in toxicity, non-flammable, non-explosive, low in cost, widely available and/or readily obtainable from renewable sources.

Among the emerging non-conventional solvents that are gradually replacing VOCs in many industries are the low melting point eutectic mixtures better known as "Deep Eutectic Solvents" (DESs).

DESs are mixtures of two or more substances that, when mixed together in appropriate molar ratios, result in the formation of liquid mixtures with a melting point much lower than that of the individual components that constitute them. Such mixtures generally are formed by at least one donor and at least one hydrogen bond acceptor, which, because of this characteristic, are strongly associated with each other. This contributes to a significant decrease in the lattice energy of the system, and thus the melting point of the mixture.

The adjective "deep" is usually used to emphasize large negative temperature deviations that characterize the eutectic mixture with respect to the expected ideal behavior, with a much lower melting point than expected. For example, by mixing choline chloride (ChCl) (a molecule commonly used as a food additive in chicken feed), which has a melting point (m.p.) of 302 °C, with urea, which has a m.p. of 133 °C, in a 1:2 molar ratio [ChCl:urea=1:2], yields a liquid at room temperature, whose m.p. is only 12 °C.

The chemical and physical properties of DESs, which make them particularly attractive for the use as non-conventional "green" solvents, include: a nearly zero vapor pressure, high thermal stability, high electrical conductivity, non-flammability, as well as recyclability. In addition, the compounds that constitute the most common DESs (e.g., amino alcohols, carbohydrates, polyalcohols, organic carboxylic acids, amino acids, vitamins) are often derived from renewable sources. Some specific examples of components commonly used as hydrogen bond acceptors comprise: ChCl, betaine, L-alanine, nicotinic acid, glycine. Examples of components that act as hydrogen bond donors include: urea, 1,3-dimethylurea, proline, lactic acid and glycerol. Thanks to these characteristics, the biodegradability of the corresponding eutectic mixtures is extraordinarily high and their toxicity is zero or very low.

In recent years, examples have been reported in the literature about the possible use of these eutectic mixtures in various fields of chemical synthesis. In particular, D. Saberi and his collaborators (D. Saberi et al., Journal of Molecular Liquids, 2014, 196, 208-210) investigated the possibility of carrying out a reductive amination reaction of aromatic aldehydes and ketones by using DESs and aromatic amines as solvents. However, the studies present in the literature to date are often limited to describing synthetic processes using DESs on a laboratory scale only, with a final production of the desired compounds in the order of milligrams, while neither the possibility of applying the same methodologies in an industrial setting is investigated, nor a possible *scale-up* of the process is carried out. Therefore, replication of the synthetic laboratory scheme on a pilot and/or industrial scale requires additional studies and/or modifications in order to maintain high yields, safety, economic benefits and desired characteristics of the final products. So much so that numerous preparatory studies and *scale-up* calculations, as well as, at times, significant modifications to the process itself are normally carried out, when it becomes necessary to transfer a process from laboratory to industrial scale.

The bisindole alkaloids (also known as indigo alkaloids) of natural origin, such as, for example, indirubin and indigo (Formulas I and II, respectively), have long been known for their anti-inflammatory and anticancer properties.

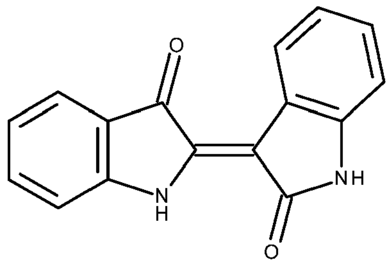

Formula I

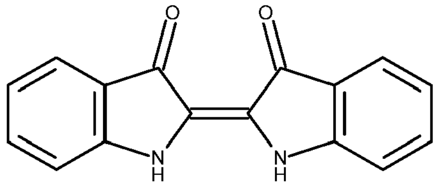

Formula II

These molecules are present in natural indigo-producing plants (for example, in the leaves and roots of plants in the genus *Indigofera*) or in mollusks of the family *Muricidae,* among others. This class of compounds is well known and widespread in the dye chemistry as well, as its components, indigo in particular, have been used for centuries in fabric dyeing.

In the pharmaceutical field, indirubin constitutes the active ingredient of a traditional Chinese medicine (called *Dang Gui Long Hui Wan*) to date used to treat the symptoms of chronic myelocytic leukemia (CML) (R. Hoessel et al., Nat Cell Biol, 1999, 1(1), 60-67). Its mechanism of action, in the context of this disease, is determined by competitive inhibition at the ATP-binding site of cyclin-dependent kinases (CDKs), which blocks the late G1 and G2/M stages of the cell cycle. *In vivo* animal studies have demonstrated that indirubin also possesses anti-inflammatory activity determined by its ability to inhibit γ-interferon production.

Other *in vitro* studies show that indirubin also possesses the ability to inhibit glycogen synthase kinase-3β, which has an important functional role in diseases such as Alzheimer's and diabetes, by acting on signal-mechanisms involved in cell cycle regulation (P. Polychronopoulos et al., J Med Chem, 2004, 47(4), 935-946).

To date, indirubin is obtained/synthesized together with indigo, its isomer, both by extractive processes from matrices of natural origin (e.g., from plants such as *Isatis tinctoria, Indigofera suffruticosa,* and *Indigofera tinctoria*) and by synthesis processes in which indirubin is a by-product due to low regio- and stereo-selectivity of the synthetic processes used.

With regards extractive processes, they suffer from several critical issues including, for example, dependence on seasonality, land availability, need to use fertilizers, use of VOCs solvents and high extraction temperatures.

The best-known synthetic approach for the preparation of indirubin is the so-called "Baeyer-Emmerling method" developed in 1880 for the synthesis of indigo, of which indirubin is a by-product formed from the base-catalyzed condensation of isatin and 3-indoxyl generated *in situ,* as shown in Scheme 1 below.

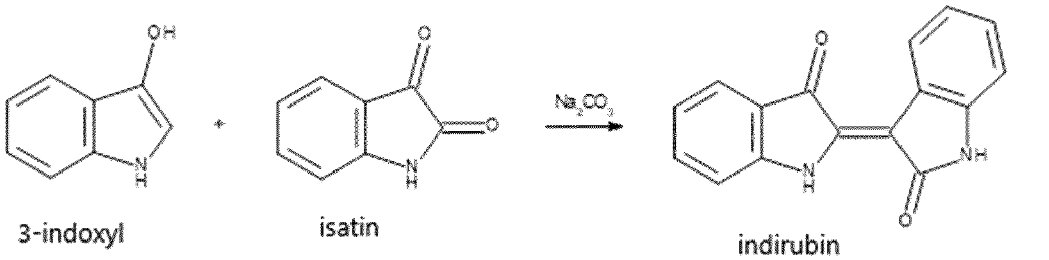


3-indoxyl

isatin

indirubin

Scheme 1

In addition to the fact that indirubin represents only a by-product of the reaction, a further limitation of this method relates to the inability to access, in large quantities, the indoxyl precursors that represent the starting material.

More innovative synthetic methods are based on enzymatic approaches using isatin or indole as starting substrates and the use of certain enzymes such as, for example, cytochrome $P_{450}$ monooxygenase. However, such enzymes are very expensive and thus significantly affect the final cost of the product obtained by this methodology.

There are also oxidative methodologies that enable this class of molecules to be obtained. In particular, it has recently been demonstrated that some indoles, when reacted with hexacarbonyl molybdenum and cumyl peroxide, proceed through an indoxyl intermediate to produce more significant amounts of indirubin, as shown in Scheme 2 below.

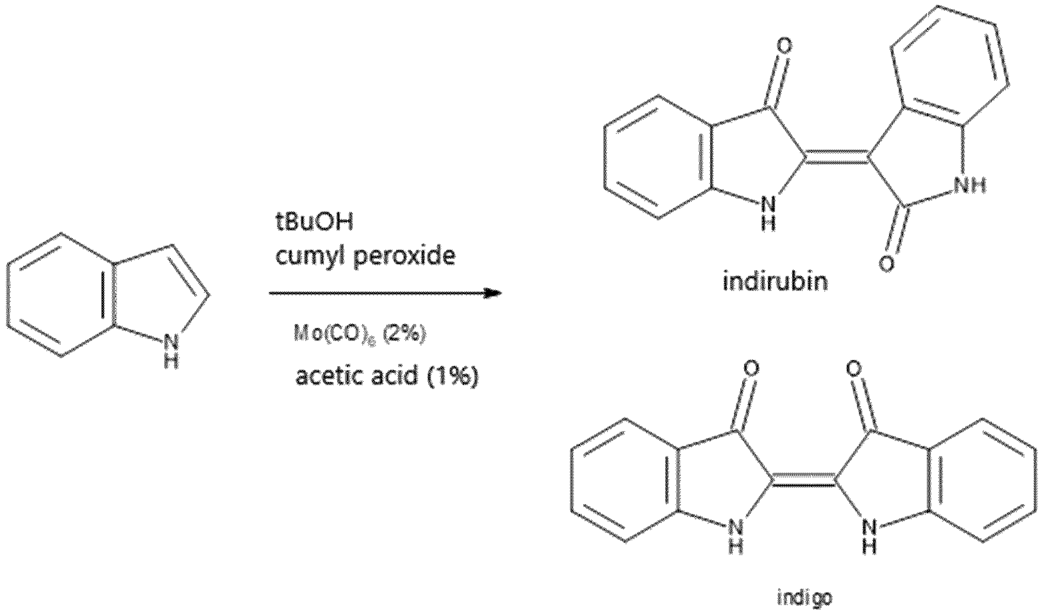


Scheme 2

However, all the methodologies described above were developed/optimized preferentially for the synthesis of indigo, which is universally used as a blue dye. The development of alternative synthetic approaches, which are regio- and stereo-selective for indirubin, has been less pursued, despite the growing interest in this molecule from a therapeutic/pharmacological point of view.

Among the most direct synthesis methods of indirubin, it was reported in 2017 by Wang et al. (Tetrahedron, 2017, 73, 2780-2785) a process of reductive isatin dimerization by using $KBH_4$ or $NaBH_4$, with indirubin isolation in yields between 63 and 90%. Said method demonstrated to be applicable up to a scale of 10 mmol of product (Scheme 3).

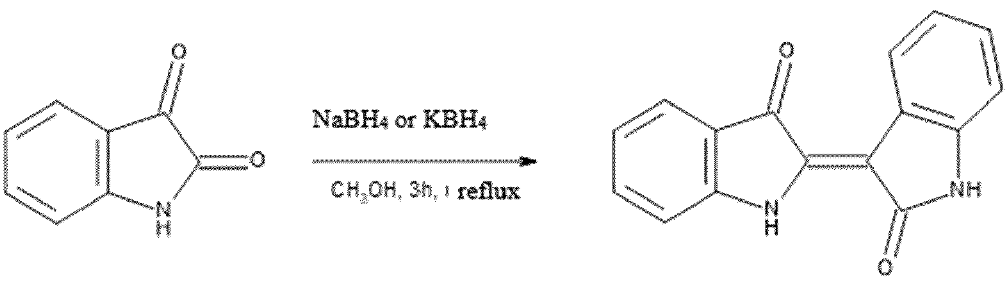


Scheme 3

In addition to its unproven industrial scalability, such method also has the disadvantage associated with the use of methanol, a volatile solvent that is neurotoxic and has purchasing restrictions, according to the regulations currently in force in Italy, due to the risks associated with storage, disposal and use by the technical personnel involved. The use of such solvent significantly affects the sustainability parameters of the production processes (see Experimental section below and related calculation of *Green chemistry metrics*), particularly the one called *Environmental Factor* (*E-factor*) and the Yield as a percentage of the effective mass (denoted by EM, and corresponding to the percentage ratio between the mass of the product and the mass of non-benign reagents used in the process).

Finally, there are also synthetic and bio-catalytic pathways that are able to produce indirubin and its derivatives from, for example, genetically modified bacteria (Joonwon Kim et al., ACS Catal, 2019, 9(10), 9539-9544). However, said synthetic pathways are still not very accessible and more expensive and they are not always easily scalable to industrial scale.

Thus, there is still a great need to provide a synthetic process for bisindole alkaloids (or indigo alkaloids) and in particular for indirubin, which is characterized, compared with the obsolete but still currently used ones, by a lower environmental impact, reduced costs, and which allows both to obtain the final product with high yields and to produce

compounds with a high degree of purity in industrially significant quantities.

## Objects of the invention

Object of the present invention is to provide a novel method of synthesizing bisindole alkaloids and, in particular, indirubin and derivatives thereof, which is suitable for large-scale industrial production, environmentally friendly and low-cost, and enables the desired molecules to be obtained in high yields.

Further object of the present invention is to provide bisindole alkaloids and, in particular, indirubin and derivatives thereof, which are obtained through an industrially applicable synthetic process with low environmental impact and cost-effectiveness.

These and other objects are achieved by the subject matter of the present invention, which relates to a novel synthetic process for obtaining bisindole alkaloids with considerable advantages both from the point of view of environmental impact and from the point of view of cost-effectiveness of the process.

## Description of the invention

Object of the present invention is a process for the environmentally sustainable synthesis of bisindole alkaloids (or indigo alkaloids) of Formula III, in particular, indirubin and derivatives thereof, which uses solvents of the DESs class, as previously described, in place of normally used VOCs.

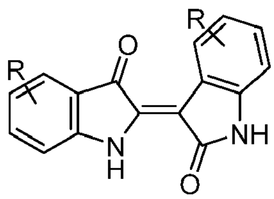

Formula III

Wherein R is selected from H; saturated, linear or branched C1-C5 alkyl residue (preferably $CH_3$), $OCF_3$, halogen (preferably Br, F, Cl, I); O-alkyl in which the alkyl residue is saturated, linear or branched C1-C5 (preferably $OCH_3$), $NO_2$.

According to a preferred aspect of the invention, R is H. Thus, in this specific case, Formula III is indirubin of Formula I.

According to the present invention, other preferred compounds are listed in Table 1 below.

**Table 1:** Meanings of R in Formula III and corresponding name of the bisindole alkaloid (or indigo alkaloid).

| R | Name and chemical formula |
|---|---|
| Br | (2'Z)-5,5'-Dibromo indirubin 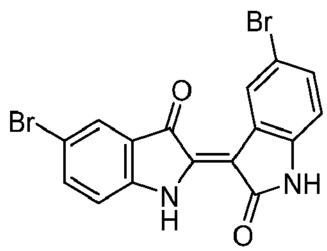 |
| F | (2'Z)-5,5'-Difluoro indirubin 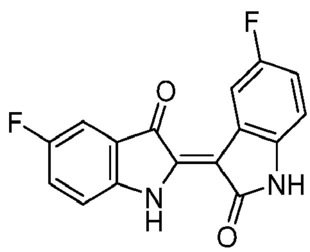 |

(continued)

| R | Name and chemical formula |
|---|---|
| $OCH_3$ | (2'Z)-5,5'-Dimethoxy indirubin 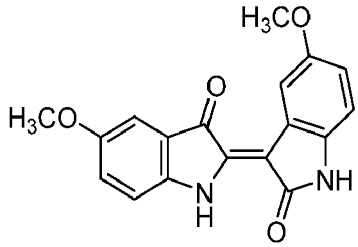 |
| $CH_3$ | (2'Z)-5,5'-Dimethyl indirubin 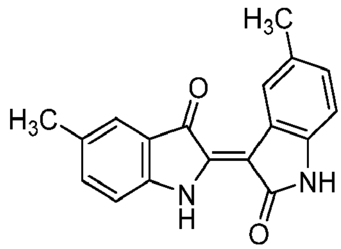 |
| Cl | (2'Z)-5,5'-Dichloro indirubin 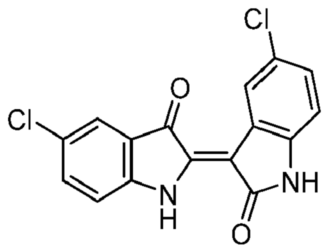 |

The synthesis methods currently available and used industrially for the production of Formula III compounds are characterized, as previously mentioned, by poor cost-effectiveness of the process, especially in case enzymes and/or genetically modified microorganisms are used, as well as by poor compatibility with the concept of "green chemistry," which is now aspired and pursued (see *Green chemistry metrics*). Furthermore, these are often synthetic pathways that have little or no stereo- and regio-selectivity, inherent risk associated with the use of toxic and flammable reagents and solvents, and are synthetic pathways characterized by an *E-factor* that is not very acceptable today.

The synthesis process object of the present invention solves these and other problems currently present, making the production of this class of compounds can be considered environmentally sustainable (see *Green chemistry metrics*), thanks to the use of DESs and the possibility to recycle them within the same process, while increasing the overall economics of the reaction.

According to an aspect of the present invention, the synthesis of bisindole alkaloids of Formula III, in particular, according to the preferred aspects of the present invention, the synthesis of the compound of Formula I (indirubin) and the compounds shown in Table I, consists of a condensation between the appropriate isatin unsubstituted or suitably functionalized, and the corresponding 3-indolinonic intermediate formed from said isatin in the presence of a reducing agent, such as, for example, sodium borohydride ($NaBH_4$) (Scheme 4).

In particular, DESs used as solvents according to the present invention can be prepared extemporaneously prior to the beginning of the synthesis process, or they can be prepared in advance and stored for long periods of time. The aforementioned DESs are obtained by mixing, in precise molar ratios, two or more components that will constitute the DES of choice for the reaction to be carried out, by heating said components to a temperature between 60 and 80 °C for 30 minutes.

According to a preferred aspect of the present invention, the DESs of choice, to be used in place of the conventional solvents, are constituted by one of the following compounds defined as hydrogen bond acceptors: ChCl, betaine, L-alanine, nicotinic acid and glycine, and one of the following compounds defined as hydrogen bond donors: urea, 1,3-dimethylurea, proline, lactic acid and glycerol. Particularly preferred is the ChCl/urea pair.

The synthesis according to the present invention, shown in Scheme 4 below in its most general terms, consists of the condensation -which takes place in DES- from the Formula IV molecule in the presence of a reducing agent as specified.

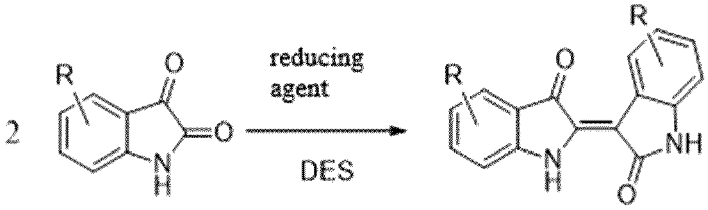


FORMULA IV

FORMULA III

Scheme 4

Wherein R can take any of the meanings previously given.

According to a preferred aspect of the invention, the reaction described in Scheme 4 uses the ChCl/urea mixture as DES, in molar ratios of 1:1.5, 1:2 and 1:2.5, preferably 1:2, to each other. According to a further preferred aspect, said R is selected equal to H to obtain the Indirubin compound, or equal to Br or F or Cl or $OCH_3$ or $CH_3$ to obtain the compounds shown in Table I.

According to another preferred aspect of the present invention, the reducing agent is $NaBH_4$ or other boron hydrides. In particular, said reducing agent is used in a stoichiometric amount relative to the reagent.

According to a further aspect of the present invention, the reaction just shown occurs at mild temperatures, preferably between 25 and 70 °C, and atmospheric pressure, without the need to apply an inert gas atmosphere, and lasts between 24 and 48 hours. According to an aspect of the present invention, said reaction occurs at 70 °C for 24 hours.

The reaction, according to Scheme 4, when aimed at obtaining Formula III compounds, leads to a yield of the final product between 52 and 82%, which is regio- and stereo-selectively pure.

Furthermore, the purification of the synthetic products of interest (Formula III) does not involve the use of additional organic solvents. The simple addition of water at the end of the reaction leads to the separation of the desired product (variously substituted bisindole alkaloid) from the aqueous phase by simple centrifugation.

The main by-product of the reaction, constituted by indole, can be easily recovered from the aqueous phase in which it is dissolved by an extraction process with low-toxicity solvent such as, for example but not limited to, ethyl acetate.

This aspect also contributes to making the synthesis process object of the present invention particularly economical and characterized by a low environmental impact.

As described above, the reaction shown in Scheme 4 can be applied to both the synthesis of indirubin and that of other compounds with antiproliferative action, or dyes/indigoids characterized by the different functional groups identified by the different meanings of R in Formula III. Molecules with pharmacological activity but, for example, also molecules that find use as photosensitizing agents in photovoltaic devices belong to this class of compounds (N.A. Simeth and S. Crespi, 2022, http://dx.medra.org/10.17374/targets.2022.25.381).

According to a preferred aspect, the process object of the present invention may be easily implemented not only to produce small quantities of bisindole alkaloids (or indigo alkaloids) on a laboratory scale, but is also suitable for industrial-scale production of the same alkaloids.

The industrial-scale applicability of the subject matter of the present invention is particularly important from the point of view of the advantages the process brings over the problems currently connected to known processes for the synthesis of the same alkaloids. In fact, if one considers the purely economic aspect, a comparison of the production costs of the bisindole alkaloids of interest obtained by the synthesis process according to the subject matter of the present invention, against their current selling price and thus obtained according to the prior art, may be made.

For example, indirubin has a market cost at the time of filing the present application of about 355 €/10 mg (see, for example, https://www.sigmaaldrich.com/IT/it/product/sigma/sml0280). In the case of using the synthesis pathway according to the process object of the present invention, the costs of the final product indirubin, calculated as the sum of the costs of the individual reagents used, is about 0.02 €/10 mg, (for what concerns raw materials only), as per Example 1 set forth in the Experimental section below.

When compared with the current state of the art, the process object of the present invention also has other particularly favorable aspects, in addition to the previously described advantages and the possibility of reducing costs by achieving higher yields, fewer steps and the presence of a more efficient purification stage.

Particularly noteworthy is the fact that non-toxic solvents are used in the process according to the invention, which therefore do not need to be stored according to special safety protocols, and may be handled easily and safely by operators, also having fewer disposal problems. The same applies to the reducing agent of choice used for synthesis according to the present invention, namely $NaBH_4$, a mild reducing agent whose use is simplified compared to other known reducing agents.

Furthermore, the procedure for purifying the desired product at the end of the reaction, still according to the procedure object of the present invention, is very simple, as it does not require the use of additional organic solvents. In fact, once the step of synthesis is completed, according to the present invention, after the addition of water, the product of interest may be separated by simple centrifugation.

Finally, it is important to remember that the components that constitute the DESs, and in particular ChCl and urea, are to be considered *"commodities,"* i.e., chemical substances produced in large quantities, in dedicated plants and by continuous processes. For this reason, they are generally low in cost and there is no need to design their synthesis because they are compounds that are always readily available on the market.

In this regard, the calculation of indicators of sustainability of a process was used (Green chemistry metrics, J. Martìnez et al., Processes, 2022, 10(7), 1274), set forth in the Experimental section below.

In particular:

a) the *E factor* value of the process (about 11) was calculated and it was highlighted the significant advantage of this procedure in comparison with that set forth in the literature by Wang et al. (Tetrahedron, 2017, 73, 2780-2785) with a triple *E factor* (about 33).

b) process sustainability indices were calculated:

- Yield as a percentage of effective mass (EM) = 192-218%;
- Renewables Intensity (RI) = 134.7-169.3
- Renewables Percentage (RP) = 98.1-98.7

from which it is highlighted the low environmental impact compared to the procedure found in the known art cited (Wang et al. 2017), for which the Yield as a percentage of effective mass (EM) calculated as the mass of the product/mass of the non-benign reagents is 3% compared to the 192-218 range calculated for the synthesis of 3 g and 1 g, respectively, of indirubin in 1:2 ChCl/urea.

The process object of the present invention thus solves technical problems related to the synthesis of bisindole alkaloids (also named indigo alkaloids), to date still present and felt in industry, in particular with reference to the production costs and environmental impact.

The following Experimental section aims to exemplify, in a non-limiting way, the present invention by illustrating some of its specific aspects and related advantages to the current state of the art.

**Experimental section**

Throughout the Experimental section below, analyses on the synthesized compounds were performed by using the following instruments: $^1H$ NMR and $^{13}C$ NMR Bruker Avance 600 MHz spectrometer; FT-IR Perkin-Elmer 681 spectrometer; GC-MS HP 5995C model; HMRS (ESI) Bruker microTOF QII mass spectrometer equipped with electrospray ion source (ESI).

*Example 1 - Synthesis of (2'Z)-indirubin according to the present invention*

The synthesis of indirubin is carried out by the method object of the present invention according to the following reaction:

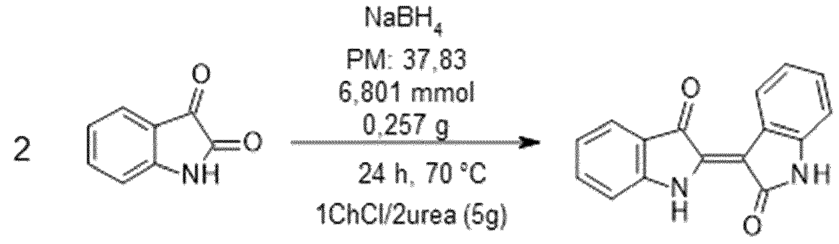


isatin

PM: 147,0320
1 g
6,801 mmol

indirubin
yield: 63%

PM: 262,0742
0,561 g
2,141 mmol

1 g isatin and 0.257 g $NaBH_4$ used as a reducing agent are added at room temperature to 5 g of 1:2 mol/mol ChCl/urea (prepared by mixing 2.32 g urea with 2.68 g ChCl and heating to 60 °C for 30 minutes). The mixture is stirred at a temperature of 70 °C, by a magnetic stirrer, for 24 hours. It is cooled to room temperature, double-distilled water (45 mL) is added and indirubin is isolated by centrifugation and decantation as a purplish-red solid, with a yield of 63%. The melting point is 351-353 °C.

Spectroscopic data: $^1H$ NMR (600 MHz, DMSO-$d_6$): δ 8.77-8.75 (m, 1H), 7.65-7.64 (m, 1H), 7.58-7.55 (m, 1H), 7.42-7.41 (m, 1H), 7.26-7.23 (m, 1H), 7.03-7.00 (m, 2H), 6.92-6.90 (m, 1H); $^{13}C$ NMR (150 MHz, DMSO-$d_6$): δ 188.7, 171.0, 159.7, 152.5, 141.0, 138.4, 137.2, 129.3, 124.7, 124.4, 121.5, 121.3, 119.1, 113.5, 109.7, 106.6; FT-IR (KBr, $cm^{-1}$) $\tilde{v}$ = 3345, 3193, 1663, 1621, 1462, 1381, 1303, 1210, 1178, 1144, 1003, 750; GC-MS (EI, 70 eV) m/z (%): 262 ($M^+$, 19), 234 (54), 205 (41), 177 (4), 158 (6), 131 (15), 117 (2), 103 (25), 76 (25), 51 (8); HRMS (ESI) *m/z* calculated for $C_{16}H_9N_2O_2$ $[M-H]^-$ 261.0670, found: 261.0664.

The cost of the raw materials (the reagents and solvents) used to produce 0.5 g indirubin is shown in Table 2 below, excluding the cost of analysis and man-hours spent on production.

**Table 2:** Production costs of indirubin (reagents and solvents) according to the process object of the present invention (source: Sigma-Aldrich website).

| reagent/solvent | quantity | cost (€) |
|---|---|---|
| ChCl/urea | 5 g | 0.622 |
| isatin | 1 g | 0.222 |
| $NaBH_4$ | 0.257 g | 0.107 |
| $H_2O$ | 45 mL | 0.07 |
| total for 500 mg of indirubin | | 1.021 |

*Example 2 - Synthesis of (2'Z)-indirubin according to the present invention:*

The synthesis of indirubin is carried out by the method object of the present invention, according to the following reaction, at a production scale increased by three times compared to Example 1:

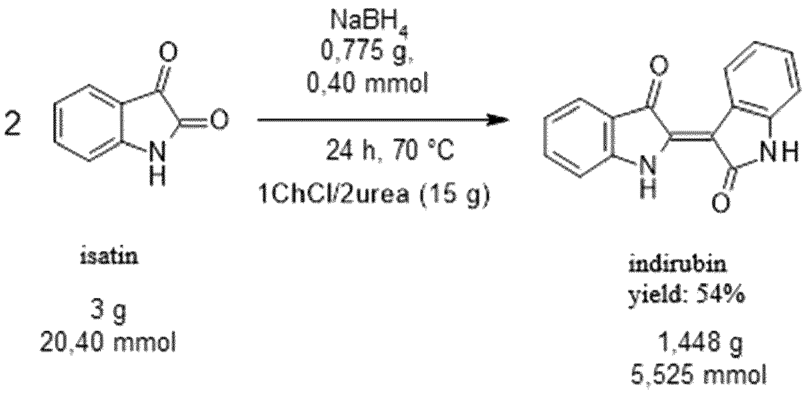


3 g isatin and 0.775 g $NaBH_4$ used as a reducing agent are added at room temperature to 15 g of a eutectic mixture of 1:2 mol/mol ChCl/urea (prepared by mixing 6.95 g urea with 8.05 g ChCl and heating to 60 °C for 30 minutes). The mixture is stirred at a temperature of 70 °C, by a magnetic stirrer, for 24 hours. It is cooled to room temperature, double-distilled water (150 mL) is added and indirubin is isolated in the form of purple solid with a yield of 54% after centrifugation of the aqueous suspension.

*Example 3 - Synthesis of (2'Z)-5,5'-dimethyl indirubin according to the present invention*

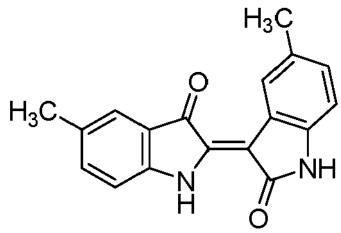

The synthesis of (2'Z)-5,5'-dimethyl indirubin is carried out by the method object of the present invention according to the reaction shown in Scheme 4, by using $NaBH_4$ as the reducing agent and 1:2 mol/mol ChCl/urea mixture as DES, prepared according to Example 1. The reaction is carried out at 70 °C for 24 hours.

The product has been purified by centrifugation and decantation as a purplish-red solid; (160 mg, yield 82%); melting point: 308-310 °C.

Spectroscopic data: $^1$H NMR (600 MHz, DMSO- $d_6$): δ 8.60-8.59 (m, 1H), 7.43-7.42 (m, 1H), 7.40-7.38 (m, 1H), 7.30-7.29 (m, 1H), 7.06-7.05 (m, 1H), 6.79-6.78 (m, 1H), 2.32 (s, 3H), 2.29 (s, 3H); $^{13}$C NMR (150 MHz, DMSO-$d_6$): δ 188.7, 171.1, 150.7, 138.7, 138.6, 138.0, 130.4, 129.8, 129.7, 125.1, 124.1, 121.6, 119.2, 113.2, 109.3, 106.5, 20.1, 20.2; FT-IR (KBr, $cm^{-1}$) $\tilde{\nu}$ = 3428, 3323, 3177, 2916, 2860, 1662, 1624, 1593, 1492, 1336, 1291, 1197, 1125, 1023, 984, 811; GC-MS (EI, 70 eV) *m/z* (%): 290 ($M^+$, 100), 262 (29), 247 (2), 219 (3), 191 (2), 145 (7), 123 (2), 116 (2), 103 (2); HRMS (ESI) *m/z* calculated for $C_{18}H_{15}N_2O_2$ $[M-H]^-$289.0983, found: 289.0972.

*Example 4 - Synthesis of (2'Z)-5,5'-dibromo indirubin according to the present invention*

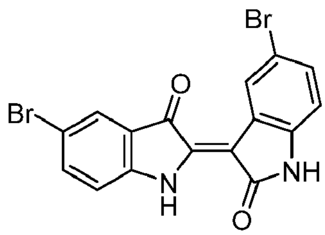

The synthesis of (2'Z)-5,5'-dibromo indirubin is carried out by the method object of the present invention according to the reaction shown in Scheme 4, by using $NaBH_4$ as the reducing agent and the 1:2 mol/mol ChCl/urea mixture as DES, prepared according to Example 1. The reaction is carried out at 70 °C for 24 hours.

The product has been isolated by centrifugation and decantation as a purplish-red solid; (165 mg, yield 58%); melting point: 299-301 °C.

Spectroscopic data: $^1$H NMR (600 MHz, DMSO-$d_6$): δ 8.91-8.90 (m, 1H), 7.80-7.79 (m, 1H), 7.75-7.73 (m, 1H), 7.43-7.39 (m, 2H), 6.87-6.86 (m, 1H); $^{13}$C NMR (150 MHz, DMSO-$d_6$): δ 187.6, 170.4, 151.4, 140.1, 139.3, 138.8, 131.6, 126.8, 126.7, 123.4, 120.8, 115.8, 113.3, 113.0, 111.5, 105.9; FT-IR (KBr, cm$^{-1}$) $\tilde{v}$ = 3487, 3100, 1675, 1613, 1464, 1289, 1211, 1123, 1015, 818; GC-MS (EI, 70 eV) *m/z* (%): 422 ($M^+$+4, 50), 420 ($M^+$+2, 100), 418 ($M^+$, 61), 391 (6), 362 (5), 340 (8), 313 (15), 283 (38), 253 (5), 223 (5), 204 (10), 177 (14), 156 (5), 129 (3), 102 (13); HRMS (ESI) *m/z* calculated for $C_{16}H_7Br_2N_2O_2$ [M-H]$^-$ 420.8833 (48.6%), 418.8854 (100.0%), 416.8874 (51.4%), found: 420.8841 (48.6) /418.8858 (100) /416.8876 (51.4).

*Example 5 - Synthesis of (2'Z)-5,5'-difluoro indirubin according to the present invention*

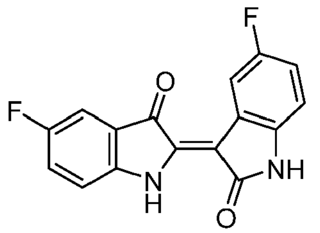

The synthesis of (2'Z)-5,5'-difluoro indirubin is carried out by the method object of the present invention according to the reaction shown in Scheme 4, by using $NaBH_4$ as the reducing agent and the 1:2 mol/mol ChCl/urea mixture as DES, prepared according to Example 1. The reaction is carried out at 70 °C for 24 hours.

The product has been purified by centrifugation and decantation as a purplish-red solid; (160 mg, yield 82%); melting point: 308-310 °C.

Spectroscopic data: $^1$H NMR (600 MHz, DMSO- $d_6$): δ 8.60-8.59 (m, 1H), 7.43-7.42 (m, 1H), 7.40-7.38 (m, 1H), 7.30-7.29 (m, 1H), 7.06-7.05 (m, 1H), 6.79-6.78 (m, 1H), 2.32 (s, 3H), 2.29 (s, 3H); $^{13}$C NMR (150 MHz, DMSO-$d_6$): δ 188.7, 171.1, 150.7, 138.7, 138.6, 138.0, 130.4, 129.8, 129.7, 125.1, 124.1, 121.6, 119.2, 113.2, 109.3, 106.5, 20.1, 20.2; FT-IR (KBr, cm$^{-1}$) $\tilde{v}$ = 3428, 3323, 3177, 2916, 2860, 1662, 1624, 1593, 1492, 1336, 1291, 1197, 1125, 1023, 984, 811; GC-MS (EI, 70 eV) *m/z* (%): 290 ($M^+$, 100), 262 (29), 247 (2), 219 (3), 191 (2), 145 (7), 123 (2), 116 (2), 103 (2); HRMS (ESI) m/z calculated for $C_{18}H_{15}N_2O_2$ [M-H]$^-$289.0983, found: 289.0972.

*Example 6 - Synthesis of (2'Z)-5,5'-dimethoxy indirubin according to the present invention*

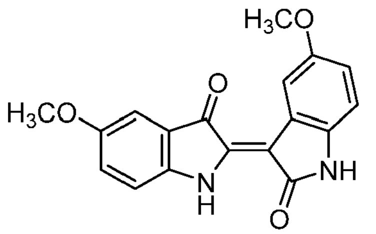

The synthesis of (2'Z)-5,5'-dimethoxy indirubin is carried out by the method object of the present invention according to the reaction shown in Scheme 4, by using $NaBH_4$ as the reducing agent and 1:2 mol/mol ChCl/urea mixture as DES, prepared according to Example 1. The reaction is carried out at 70 °C for 24 hours.

The product has been isolated by centrifugation and decantation as a blue solid; (121 mg, yield 56%); melting point: 258-260 °C.

Spectroscopic data: $^1$H NMR (600 MHz, DMSO-$d_6$): δ 8.47-8.46 (m, 1H), 7.34-7.33 (m, 1H), 7.21-7.19 (m, 1H), 7.16-7.15 (m, 1H), 6.85-6.83 (m, 1H), 6.80-6.79 (m, 1H), 3.78 (s, 3H), 3.77 (s, 3H); $^{13}$C NMR (150 MHz, DMSO-$d_6$): δ

188.8, 171.0, 154.5, 154.3, 147.3, 139.1, 134.7, 125.3, 122.2, 119.2, 115.0, 114.5, 110.3, 109.8, 106.8, 106.7, 55.7, 55.3; FT-IR (KBr, $cm^{-1}$) $\tilde{v}$ = 3324, 3169, 2829, 1662, 1623, 1597, 1493, 1320, 1285, 1197, 1157, 1013, 890; GC-MS (EI, 70 eV) *m/z* (%): 322 ($M^+$, 100), 307 (21), 293 (3), 279 (26), 264 (2), 251 (10), 236 (2), 208 (4), 192 (2), 161 (5), 147 (1), 125 (1), 90 (2), 77 (1); HRMS (ESI) *m/z* calculated for $C_{18}H_{13}N_2O_4$ $[M-H]^-$321.0881, found: 321.0887.

*Example 7 - Calculation of the E-Factor for the synthesis of indirubin from 1 g isatin in ChCl/urea (1:2) according to the present invention*

The calculation is done from indirubin synthesis performed according to Example 1 as set forth below:

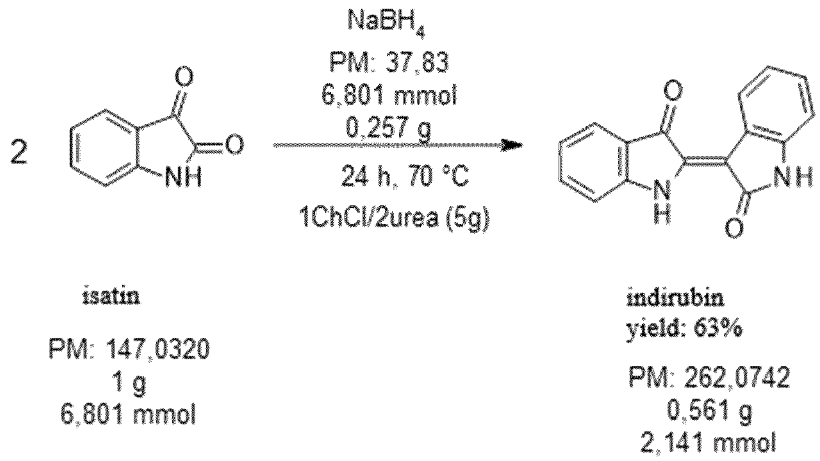


Total quantity of reagents = 5 g (DES) + 1 g (Isatin) + 0.257 g ($NaBH_4$) = 6.257 g Quantity of the final product = 0.561 g
Quantity of wastes = 6.257 g - 0.561 g = 5.696 g
***E-Factor*** = 5.696 g/ 0.561 g = 10.15

*Example 8 - Calculation of the E-Factor for the synthesis of indirubin from 3 g isatin in ChCl/urea (1:2) according to the present invention*

The calculation is done from indirubin synthesis performed according to Example 2 as set forth below:

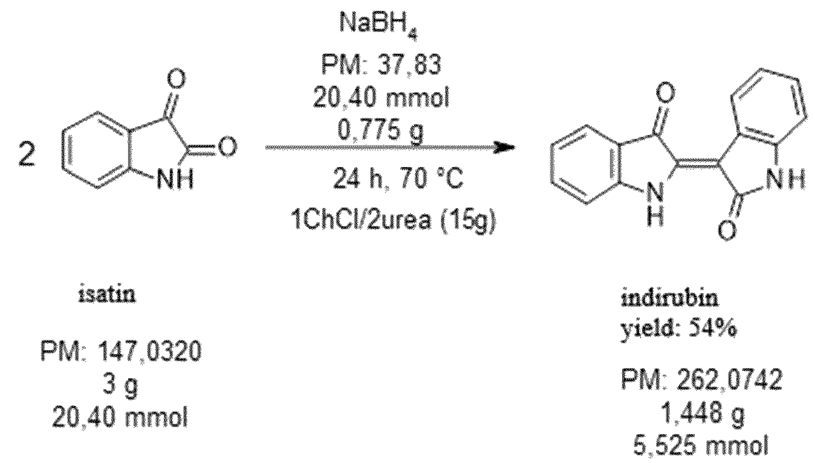


Total quantity of reagents = 15 g (DES) + 3 g (Isatin) + 0.775 g ($NaBH_4$) = 18.775 g
Quantity of the final product = 1.448 g
Quantity of wastes = 18.775 g - 1.448 g = 17.327 g
***E-Factor*** = 17.327 g/1.448 g = 11.97

*COMPARATIVE Example 9 - Calculation of the E-Factorfor the synthesis of indirubin from 1.5 g isatin in methanol (MeOH) according to the Wang et al. synthesis (Tetrahedron, 2017, 73, 2780-2785)*

The calculation is done from indirubin synthesis performed according to the reaction described in Wang et al. as set forth below:

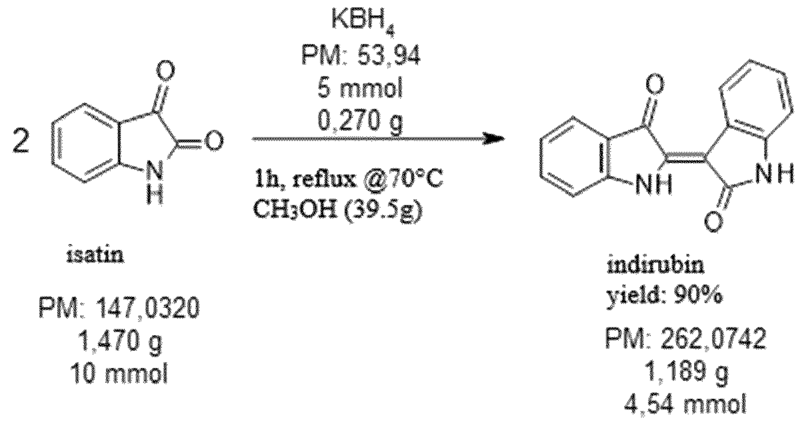


Total quantity of reagents = 39.5 g ($CH_3OH$) + 1.470 g (Isatin) + 0.270 g ($KBH_4$) = 41.240 g
Quantity of the final product = 1.189 g
Quantity of wastes = 41.240 g - 1.189 g = 40.051 g
***E-Factor*** = 40.051 g/1.189 g = 33.68

*Example 10 - Green chemistry metrics for the synthesis of indirubin from 1 g isatin in ChCl/urea (1:2) according to the present invention*

The calculation of *Green chemistry metrics* stated hereinafter is done from indirubin synthesis performed according to Example 1.

**Percentage yield** = 63%
**Conversion percentage** = 100%

**Selectivity percentage** = percent yield / percent conversion × 100 = 63%

**Atomic Economy (AE)** = PM product/total PM of reagents × 100 = 262.0742 / 331.894 [(147.0320) × 2 isatin + 37.83 $NaBH_4$] × 100 = 79%

**Reaction mass efficiency (RME)** = isolated mass of product/total mass of reactants × 100 = 0.561 g/1.257 g (1 g isatin + 0.257 g $NaBH_4$) × 100 = 45%

**Optimal Efficiency (OE)** = RME/AE × 100 = 45/79 × 100 = 57%

**Process Mass Intensity (PMI)**[a] = total mass of a process without work-up/mass of product = 6.257 g (1 g isatin + 5 g DES + 0.257 g $NaBH_4$)/0.561 g = 11.1

**Process Mass Intensity (PMI)**[b] = total mass of a process including work-up/mass of product = 96.257 g [1 g isatin + 5 g DES + 0.257 g $NaBH_4$ + (45 g × 2) $H_2O$]/0.561 g = 171.6

**Yield as a percentage of effective mass (EM)** = mass of product/mass of non-benign reagents × 100 = 0.561 g/(0.257 g $NaBH_4$) × 100 = 218%

**Renewables Intensity (RI)** = mass of all renewable materials used/mass of product = 95 g [5 g DES + (45 g × 2) $H_2O$]/0.561 g = 169.3

**Renewables Percentage (RP)** = RI/PMI[b] × 100 = 169.3/171.6 g × 100 = 98.7

*Notes:* PMI[a]: total mass of the reagents and solvents used in the reaction; PMI[b]: total mass of the reagents and solvents used in the reaction, and the solvent used in the reaction processing procedure.

*Example 11 - Green chemistry metrics for the synthesis of indirubin from 3 g isatin in ChCl/urea (1:2) according to the present invention*

The calculation of *Green chemistry metrics* stated hereinafter is done from indirubin synthesis performed according to Example 2.

**Percentage yield** = 54%
**Conversion percentage** = 100%

**Selectivity percentage** = percent yield / percent conversion × 100 = 54%

**Atom Economy (AE)** = PM product/total PM of reagents × 100 = 262.0742 / [(147.0320) × 2 isatin + 37.83 $NaBH_4$] × 100 = 79%

**Reaction Mass Efficiency (RME)** = isolated mass of product/total mass of reactants × 100 = 1.448 g/ 3.775 g (3 g isatin + 0.775 g $NaBH_4$) × 100 = 38%

**Optimal Efficiency (OE)** = RME/AE × 100 = 38/79 × 100 = 48%

**Process Mass Intensity (PMI)**[a] = total mass of a process without work-up/mass of product = 18.775 g (3 g isatin + 15 g DES + 0.775 g $NaBH_4$)/1.448 g = 13.0

**Process Mass Intensity (PMI)**[b] = total mass of a process including work-up/mass of product = 198.775 g [3 g isatin + 15 g DES + 0.775 g $NaBH_4$ + (90 g × 2) $H_2O$]/1.448 g = 137.3

**Yield as a percentage of effective mass (EM)** = mass of product/mass of non-benign reagents × 100 = 1.448 g/(0.775 g $NaBH_4$) × 100 = 192%

**Renewables Intensity (RI)** = mass of all renewable materials used/mass of product = 195 g [15 g DES + (90 × 2 g) $H_2O$]/1.448 g = 134.7

**Renewables Percentage (RP)** = RI/$PMI^b$ × 100 = 134.7/137.3 × 100 = 98.1

*Notes:* $PMI^a$: total mass of the reagents and solvents used in the reaction; $PMI^b$: total mass of the reagents and solvents used in the reaction, and the solvent used in the reaction processing procedure.

*COMPARATIVE Example 12 - Green chemistry metrics for the synthesis of indirubin from 1,5 g isatin in MeOH according to the Wang et al. synthesis*

The calculation of *Green chemistry metrics* stated hereinafter is done from indirubin synthesis performed according to Example 9.

**Percentage yield** = 90%
**Conversion percentage** = 100%

**Selectivity percentage** = percent yield / percent conversion × 100 = 90%

**Atom Economy (AE)** = PM product/total PM of reagents × 100 = 262.0742/[(147.0320 × 2) isatin + 53.94 $KBH_4$] × 100 = 75%

**Reaction Mass Efficiency (RME)** = isolated mass of product/total mass of reactants × 100 = 1.189 g/1.74 g (1.47 g isatin + 0.27 g $KBH_4$) × 100 = 68%

**Optimal Efficiency (OE)** = RME/AE × 100 = 68/75 × 100 = 91%

**Process Mass Intensity (PMI)$^a$** = total mass of a process without work-up/mass of product = 41.24 g (1.47 g isatin + 39.5 g MeOH + 0.27 g $KBH_4$)/1.189 g = 34.7

**Process Mass Intensity (PMI)$^b$** = total mass of a process including work-up/mass of product = N.D.

**Yield as a percentage of effective mass (EM)** = mass of product/mass of non-benign reagents × 100 = 1.189 g/39.77 g (39.5 g MeOH + 0.27 g $KBH_4$) × 100 = 3%

**Renewables Intensity (RI)** = mass of all renewable materials used/mass of product = N.D.

**Renewables percentage (RP)** = RI/PMI$^b$ × 100 = N.D.

*Notes:* PMI$^a$: total mass of the reagents and solvents used in the reaction; PMI$^b$: total mass of the reagents and solvents used in the reaction, and the solvent used in the reaction processing procedure.

**Claims**

1. A process for the synthesis of bisindole alkaloids, **characterized in that** it uses DESs as solvents.

2. The process according to claim 1, **characterized in that** said DESs consist of the mixture of a compound selected from: choline chloride (ChCl), betaine, L-alanine, nicotinic acid or glycine, and a compound selected from: urea, 1,3-dimethylurea, proline, lactic acid or glycerol.

3. The process according to claim 2, **characterized in that** said DESs consist of the ChCl/urea pair.

4. The process according to claim 1, **characterized in that** said bisindole alkaloids are of Formula III

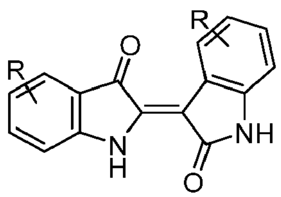

Formula III

wherein R is selected from H; saturated, linear or branched C1-C5 alkyl residue; $OCF_3$; halogen; O-alkyl, wherein the alkyl residue is saturated, linear or branched C1-C5; $NO_2$.

5. The process according to claim 4, **characterized in that** said compound of Formula III corresponds to one of the following compounds in which R is:

| R | Name and chemical formula |
|---|---|
| Br | (2'Z)-5,5'-Dibromo indirubin 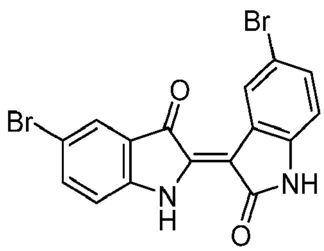 |
| F | (2'Z)-5,5'-Difluoro indirubin |

(continued)

| R | Name and chemical formula |
|---|---|
| | 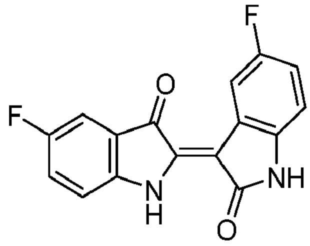 |
| $OCH_3$ | (2'Z)-5,5'-Dimethoxy indirubin 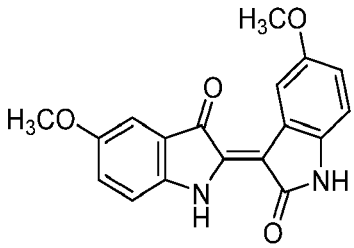 |
| $CH_3$ | (2'Z)-5,5'-Dimethyl indirubin 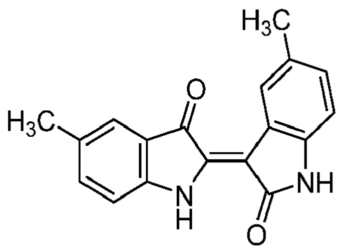 |
| Cl | (2'Z)-5,5'-Dichloro indirubin 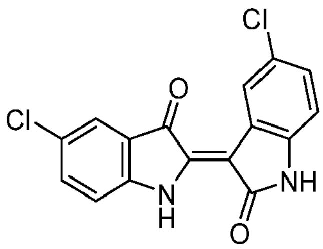 |

**6.** The process according to any one of the preceding claims, **characterized in that** it comprises a condensation between the suitable isatin of Formula IV and the corresponding indolinonic intermediate to yield the compound of Formula III, in the presence of a reducing agent according to the reaction:

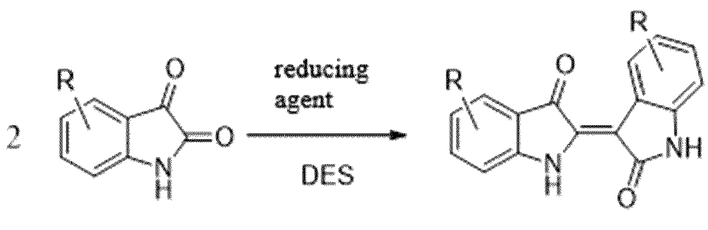


FORMULA IV FORMULA III

wherein R is selected from H; saturated, linear or branched C1-C5 alkyl residue; $OCF_3$; halogen; O-alkyl in which

the alkyl residue is saturated, linear or branched C1-C5; $NO_2$.

7. The process according to claim 6, **characterized in that** said reducing agent is sodium borohydride ($NaBH_4$).

8. The process according to claim 6 or 7, **characterized in that** said compound of Formula III is isolated by centrifugation at the end of the process from an aqueous suspension.

9. Use of DESs as solvents for the synthesis of bisindole alkaloids.

10. Indirubin obtained with the process according to claim 6.

Europäisches Patentamt
European Patent Office
Office européen des brevets

# EUROPEAN SEARCH REPORT

Application Number
EP 23 21 7323

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | CN 103 980 182 A (UNIV NORTHWESTERN) 13 August 2014 (2014-08-13)<br>* page 2; claim 1 *<br>* page 6 - page 7; examples 1-6 * | 10<br>1-9 | INV.<br>C09B67/42 |
| X<br>Y | WANG CUILING ET AL: "One step synthesis of indirubins by reductive coupling of isatins with KBH4", TETRAHEDRON, vol. 73, no. 19, 2017, pages 2780-2785, XP029975317, ISSN: 0040-4020, DOI: 10.1016/J.TET.2017.03.077<br>* page 2781 - page 2782; tables 1-2 * | 10<br>1-9 | |
| Y<br>A | SATHISH KOTA ET AL: "Dimethylurea/L-tartaric acid as deep eutectic solvent for one-pot synthesis of 2-(methylamino)-3-nitrospiro-[chromene] and N -methyl-3-nitro-4 H chromen-2-amines", SYNTHETIC COMMUNICATIONS, 17 February 2021 (2021-02-17), pages 1-10, XP093064147, US ISSN: 0039-7911, DOI: 10.1080/00397911.2021.1878225<br>* page 1242 *<br>* page 1244; figure 2 * | 1-9<br>10 | |
| | -/-- | | |

| | | | TECHNICAL FIELDS SEARCHED (IPC) |
|---|---|---|---|
| | | | C09B |

The present search report has been drawn up for all claims

| Place of search | Date of completion of the search | Examiner |
|---|---|---|
| Munich | 25 April 2024 | Jeanjean, Fabien |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 23 21 7323

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ZHANG WEI-HONG ET AL: "Choline chloride and lactic acid: A natural deep eutectic solvent for one-pot rapid construction of spiro[indoline-3,4'-pyrazolo[3,4-b]pyridines]", JOURNAL OF MOLECULAR LIQUIDS, vol. 278, 2019, pages 124-129, XP085612834, ISSN: 0167-7322, DOI: 10.1016/J.MOLLIQ.2019.01.065 | 1-9 | |
| A | * page 124 * * page 125; table 1; compound 4a * ----- | 10 | |
| Y | SABERI DARIUSH ET AL: "Reductive amination of aldehydes and ketones catalyzed by deep eutectic solvent using sodium borohydride as a reducing agent", JOURNAL OF MOLECULAR LIQUIDS, vol. 196, 2014, pages 208-210, XP029029122, ISSN: 0167-7322, DOI: 10.1016/J.MOLLIQ.2014.03.024 | 1-9 | |
| A | * page 208 * * page 209; table 1 * ----- | 10 | TECHNICAL FIELDS SEARCHED (IPC) |

The present search report has been drawn up for all claims

| Place of search | Date of completion of the search | Examiner |
|---|---|---|
| Munich | 25 April 2024 | Jeanjean, Fabien |

2

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

# ANNEX TO THE EUROPEAN SEARCH REPORT ON EUROPEAN PATENT APPLICATION NO.

EP 23 21 7323

This annex lists the patent family members relating to the patent documents cited in the above-mentioned European search report. The members are as contained in the European Patent Office EDP file on
The European Patent Office is in no way liable for these particulars which are merely given for the purpose of information.

25-04-2024

| Patent document cited in search report | Publication date | Patent family member(s) | Publication date |
|---|---|---|---|
| CN 103980182 A | 13-08-2014 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **D. SABERI et al.** *Journal of Molecular Liquids,* 2014, vol. 196, 208-210
- **R. HOESSEL et al.** *Nat Cell Biol,* 1999, vol. 1 (1), 60-67
- **P. POLYCHRONOPOULOS et al.** *J Med Chem,* 2004, vol. 47 (4), 935-946
- **WANG et al.** *Tetrahedron,* 2017, vol. 73, 2780-2785
- **JOONWON KIM et al.** *ACS Catal,* 2019, vol. 9 (10), 9539-9544
- **J. MARTÌNEZ et al.** Green chemistry metrics. *Processes,* 2022, vol. 10 (7), 1274